(19) Europäisches Patentamt

European Patent Office

Office européen des brevets

(11) EP 0 662 264 B1

(12) **FASCICULE DE BREVET EUROPEEN**

(45) Date de publication et mention
de la délivrance du brevet:
**21.08.1996 Bulletin 1996/34**

(21) Numéro de dépôt: **93920732.0**

(22) Date de dépôt: **15.09.1993**

(51) Int Cl.6: **H02M 3/156**, H03K 17/64

(86) Numéro de dépôt international:
**PCT/EP93/02497**

(87) Numéro de publication internationale:
**WO 94/08386 (14.04.1994 Gazette 1994/09)**

(54) **PROCEDE ET DISPOSITIF DE REGULATION DU COURANT MOYEN DANS UNE CHARGE SELFIQUE COMMANDEE EN RAPPORT CYCLIQUE D'OUVERTURE VARIABLE**

VERFAHREN UND VORRICHTUNG ZUR REGLUNG DES STROMMITTELWERTES IN EINER DURCH VERÄNDERBARES TASTVERHÄLTNIS GESTEUERTEN INDUKTIVEN LAST

METHOD AND DEVICE FOR REGULATING THE MEAN CURRENT ACROSS AN INDUCTIVE LOAD CONTROLLED TO GIVE A VARIABLE OPENING DUTY CYCLE

(84) Etats contractants désignés:
**DE ES GB IT**

(30) Priorité: **28.09.1992 FR 9211635**

(43) Date de publication de la demande:
**12.07.1995 Bulletin 1995/28**

(73) Titulaire: **SIEMENS AUTOMOTIVE S.A.**
**F-31036 Toulouse Cédex (FR)**

(72) Inventeurs:
• **LUCCHESE, Alain**
**F-31320 Vigoulet-Auzil (FR)**

• **PHILIPPE, Christian**
**F-31270 Villeneuve-Tolosanne (FR)**

(74) Mandataire: **Fuchs, Franz-Josef, Dr.-Ing. et al**
**Postfach 22 13 17**
**80503 München (DE)**

(56) Documents cités:
**US-A- 4 636 711**

• **RESEARCH DISCLOSURE, no. 31730, 10 septembre 1990, Emsworth, GB, page 720; "Coil drive algorithm"**

## Description

L'invention concerne un procédé et un dispositif de régulation du courant moyen dans une charge selfique commandée en rapport cyclique d'ouverture variable. Elle s'applique, notamment, à la régulation du courant moyen dans une bobine d'excitation d'une électrovanne de réglage d'un paramètre de contrôle d'un moteur.

Un des impératifs auquel doit répondre une électrovanne est de permettre un réglage précis et rapide du paramètre de contrôle d'un moteur, sans que ce réglage ne soit affecté par les variations de température et d'alimentation de cette électrovanne.

Or, l'angle d'ouverture d'une électrovanne, qui constitue la donnée de réglage, est proportionnel au courant moyen qui traverse la bobine d'excitation, et ce courant moyen varie en fonction de la température et de la tension d'alimentation pour une électrovanne commandée en rapport cyclique d'ouverture. De plus, le courant moyen traversant la bobine d'excitation n'est pas un paramètre directement accessible.

Par conséquent, on conçoit que l'obtention d'un réglage précis et rapide d'un paramètre donné, insensible aux variations de température et d'alimentation d'une électrovanne, constitue un impératif auquel il est peu aisé de répondre.

Une solution tendant à résoudre ce problème est décrite dans le brevet français FR 2.639.680 qui vise un dispositif de pilotage d'une électrovanne en rapport cyclique d'ouverture, dans lequel les variations du paramètre d'ouverture sont compensées par des moyens de calcul complexes faisant intervenir le rapport cyclique réel mesuré, le courant maximal atteint dans la charge, et le rapport cyclique théorique nécessaire, dans des conditions de température et de tension d'alimentation définies, pour obtenir l'angle d'ouverture désiré.

Cette technique, fonctionnant selon le principe d'un double asservissement, et basée sur le courant maximal atteint dans la charge qui dépend du rapport cyclique réel, nécessite des tables complexes et des approximations successives qui rendent le dispositif très coûteux en temps de calcul et en taille mémoire.

On connait également de l'article "Coil drive algorithm" publié dans la revue RESEARCH DISCLOSURE du 10 septembre 1990 sous le numéro 31730, un procédé visant à déterminer la résistance d'une charge inductive en l'alimentant momentanément avec un rapport cyclique de 100% pendant une durée de plusieurs constantes de temps et en mesurant le courant atteint à l'issue de cette durée. Cependant, la seule détermination de la résistance de la charge inductive ne suffit pas pour réguler avec une bonne précision le courant moyen dans la charge, particulièrement lorsqu'une diode de recirculation du courant est montée en parallèle avec celle-ci.

La présente invention vise à pallier ces inconvénients et a pour principal objectif de fournir un procédé et un dispositif permettant de réguler avec une bonne précision le courant moyen dans une charge selfique, ce procédé de conception simple permettant, en outre, la réalisation de dispositifs de faible prix de revient.

Un autre objectif de l'invention est de fournir un procédé permettant de s'affranchir totalement des variations de la tension d'alimentation.

A cet effet, l'invention vise un procédé de régulation du courant moyen dans une charge selfique connectée entre une source d'alimentation délivrant une tension Vb, et un commutateur apte, de façon périodique et avec un rapport cyclique de commande, soit à conduire le courant vers un potentiel de masse, soit à interrompre cette conduction, une diode étant adaptée pour permettre à l'énergie stockée dans la charge selfique de recirculer vers le potentiel Vb, ledit procédé consistant à:

- générer, de façon cyclique et avec une récurrence faible relativement à la période de commutation, une augmentation de la durée de conduction du commutateur de façon à atteindre le courant de saturation dans la charge selfique,
- mesurer le courant Isat circulant dans le commutateur une fois celui-ci atteint, et
- ajuster le courant moyen en faisant varier le rapport cyclique de commande.

Selon l'invention, ce procédé se caractérise en ce que l'on calcule, en vue d'obtenir un courant moyen Im désiré, un nouveau rapport cyclique RCO tel que RCO $= \frac{\text{Im} + \text{Io}}{\text{Isat} + \text{Io}}$, où Io est une constante électrique caractéristique de la charge selfique et de la diode.

Le procédé selon l'invention est basé sur le principe que la variation du courant de saturation est une image représentative de la variation de la résistance de la charge selfique et de la tension d'alimentation.

A partir de ce principe, et grâce à la relation liant le courant moyen Im au courant de saturation Isat et au rapport cyclique RCO, la connaissance de ce courant Isat permet de s'affranchir des autres paramètres du circuit pour le calcul du courant moyen Im.

Dans cette relation, la constante Io est destinée à permettre de prendre en considération l'impact de la résistance de la charge selfique et des paramètres électriques de la diode sur le courant moyen, en particulier lors de la phase de recirculation du courant.

Les expérimentations ont permis de constater qu'une bonne approximation de Io consiste à la calculer selon la formule :

$$\text{Io} = \frac{V_D}{R}$$

dans laquelle VD est la tension aux bornes de la diode dans le sens passant de cette dernière, et R la résistance nominale de la charge selfique.

Il est à noter, par ailleurs, que ce procédé ne fait intervenir qu'un paramètre mémorisé, à savoir Io, ce qui conduit à la réalisation d'un dispositif ne nécessitant qu'une très faible capacité de mémoire et donc d'un faible prix de revient, comparé par exemple à celui du dispositif décrit dans le brevet FR 2.639.680.

Selon un mode de mise en oeuvre préférentiel, l'on génère, en outre, une augmentation de la durée de commande du commutateur tout en conservant un même rapport cyclique de commande. De cette façon, on restitue une même valeur du courant moyen Im une fois l'augmentation de durée de commande effectuée.

Par ailleurs, selon une autre caractéristique de l'invention, et entre deux mesures du courant Isat :

- on procède avec une périodicité prédéterminée, à une mesure de la tension d'alimentation Vb,
- on calcule, à chaque instant t où la tension Vb est mesurée, une valeur du courant Isat (t) = Isat $\Phi$ x $\frac{Vb(t)}{Vb\ \Phi}$, où Isat $\Phi$ est la dernière valeur mesurée du courant Isat, et Vb $\Phi$ la valeur de la tension d'alimentation Vb mesurée au moment de l'acquisition de Isat $\Phi$,
- et on calcule un nouveau rapport cyclique RCO = $\frac{Im + Io}{Isat(t) + Io}$.

Ces calculs intermédiaires du courant de saturation Isat en fonction de la tension d'alimentation Vb permettent de s'affranchir des variations de ladite tension entre deux mesures de ce courant de saturation.

Cette amélioration de la précision de la régulation du courant moyen présente un avantage notable lorsque le procédé est appliqué à des systèmes où la tension d'alimentation varie de manière significative entre deux mesures du courant Isat (par exemple : mise en route du ventilateur du groupe "froid" d'une climatisation).

Selon un mode de mise en oeuvre préférentiel, cette tension d'alimentation Vb est, en outre, mesurée en délivrant une image de celle-ci au moyen d'un pont diviseur vers une entrée d'un convertisseur analogique/numérique utilisé pour la mesure de Isat.

L'invention s'étend à un dispositif de régulation du courant moyen dans une charge selfique dotée d'un premier pôle connecté à une source d'alimentation délivrant une tension Vb, et d'un deuxième pôle, ledit dispositif comprenant :

- un commutateur connecté au deuxième pôle de la charge selfique et apte, de façon périodique et avec un rapport cyclique de commande donné, soit à laisser le courant circuler vers un potentiel de masse, soit à interrompre cette circulation,
- et une diode de roue libre montée en parallèle avec la charge selfique et destinée à assurer la continuité du courant dans ladite charge selfique.

Selon l'invention, ce dispositif se caractérise en ce qu'il comprend en outre :

- des moyens de mesure du courant circulant dans le commutateur,

- des moyens de conversion analogique/numérique agencés pour recevoir un signal issu des moyens de mesure,
- et une unité de calcul agencée pour recevoir le signal issu des moyens de conversion analogique/ numérique et programmée pour :

. générer un signal représentatif du rapport cyclique de commande RCO à appliquer au commutateur, avec :

$$RCO = \frac{Im + Io}{Isat + Io}$$

où :

Im = courant moyen désiré,
Io = constante électrique caractéristique de la charge selfique et de la diode,
Isat = courant maximal circulant dans le commutateur.

. recalculer cycliquement ce rapport cyclique RCO en commandant une augmentation de la durée de commande du commutateur de façon à annuler l'effet selfique et obtenir le courant Isat.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :

- la figure 1 est un schéma fonctionnel d'un dispositif conforme à l'invention,
- et la figure 2 est une série de trois courbes générées dans le dispositif selon l'invention, en fonction du temps.

Le dispositif représenté à la figure est conçu pour réguler le courant moyen dans une charge selfique (R, L) 1 dont l'un des pôles est connecté à une source d'alimentation délivrant une tension Vb, en compensant les effets des variations du circuit (tension d'alimentation Vb, résistance R de cette charge selfique).

Ce dispositif comprend, en premier lieu, une diode de roue libre 2 montée en parallèle avec la charge selfique 1 et destinée à assurer la continuité du courant dans ladite charge, et un commutateur électronique 3 tel qu'un transistor adapté pour permettre de connecter le deuxième pôle de la charge selfique 1 au potentiel de masse.

Le dispositif comprend, en second lieu, un microcontrôleur 4 doté d'une unité centrale de calcul 5 comportant une sortie de commande Sa, et d'un convertisseur analogique/numérique intégré 6 comportant au moins deux entrées 6a, 6b.

De façon classique, l'unité centrale 5 est, en premier lieu, connectée à des capteurs (non représentés) délivrant des signaux électriques représentatifs de paramètres de fonctionnement du moteur (vitesse de rotation, température, ...).

En second lieu, le microcontrôleur 4 est connecté à un amplificateur 7 disposé de façon à délivrer vers l'une des entrées 6a du convertisseur analogique/numérique 6, un signal électrique proportionnel au courant circulant dans le commutateur 3.

Ce signal électrique est obtenu en mesurant la tension aux bornes d'une résistance de pied 8 en série entre le commutateur 3 et la masse.

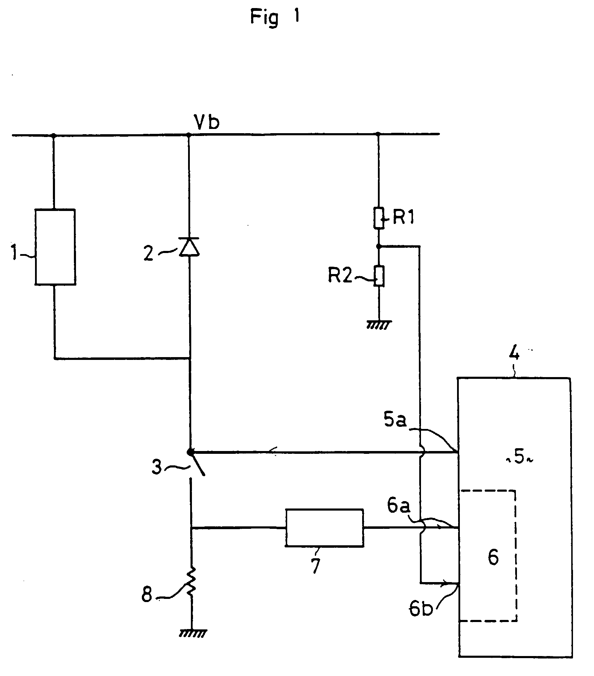

En dernier lieu, le dispositif selon l'invention comprend des moyens de mesure de la tension d'alimentation Vb, comportant un pont diviseur agencé pour délivrer un signal proportionnel à la valeur de cette tension vers l'entrée 6b du convertisseur analogique/numérique 6. Tel que représenté à la figure 1, ce pont diviseur est constitué de deux résistances R1 et R2.

L'unité centrale 5 du dispositif selon l'invention dispose donc d'une part d'informations représentatives du fonctionnement du moteur, et d'autre part, de deux informations représentatives respectivement du courant I circulant dans le commutateur 3, et de la tension d'alimentation Vb.

Cette unité centrale 5 est programmée pour :

- générer, de façon cyclique et avec une récurrence faible relativement à la période de commutation du commutateur électronique 3, une augmentation de la durée de commande de ce dernier de façon à annuler l'effet selfique vis-à-vis du courant circulant dans la charge selfique 1 ;
- fournir au convertisseur analogique/numérique 6 une impulsion d'ordre de conversion quasi-simultanément avec le signal de commande de coupure du commutateur 3 ;
- calculer, en fonction du courant moyen Im désiré, fonction de l'aspect motorisation, un nouveau rapport cyclique RCO tel que :

$$RCO = \frac{Im + Io}{Isat + Io}$$

où Io est une constante électrique telle que $Io = \frac{V_D}{R}$ où $V_D$ est la tension aux bornes de la diode 2.

A partir de cette relation liant le courant Im au courant de saturation Isat et au rapport cyclique RCO, la connaissance de Isat dont les variations dépendent de la résistance série R de la charge et/ou de la tension d'alimentation Vb, permet de réguler le courant moyen Im en compensant les effets de variation du circuit.

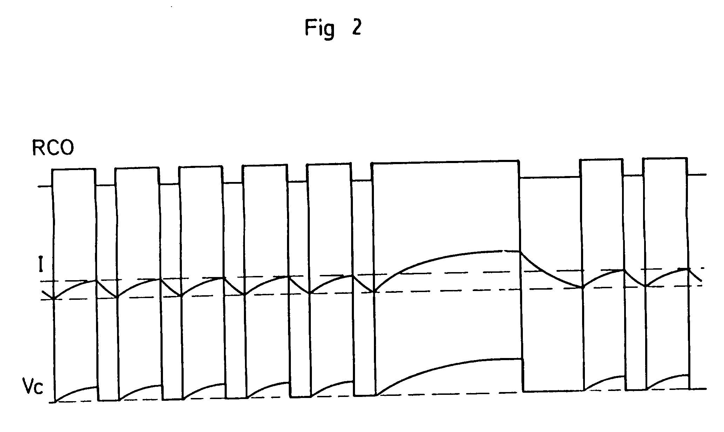

La figure 2 représente le tracé des signaux suivants obtenus à partir d'une telle programmation de l'unité centrale 5 :

RCO : signal de commande délivré par l'unité centrale 5,

I : intensité du courant qui circule dans la charge selfique 1,

Vc : tension en sortie de l'amplificateur 7 ; cette tension est l'image de celle de I lorsque le signal RCO est à son état un et prend une valeur nulle lorsque le signal est à son état zéro (dans ce cas, le courant circule dans la boucle formée par la charge selfique 1 et la diode de roue libre 2 associée).

Par ailleurs, l'unité centrale 5 est également programmée, entre deux mesures du courant Isat et avec une périodicité prédéterminée, pour :

. fournir au convertisseur analogique/numérique 6 une impulsion d'ordre de conversion du signal représentatif de la tension d'alimentation Vb ;

. calculer, pour chaque conversion réalisée, une valeur du courant $Isat(t) = Isat\ \Phi \times \frac{Vb(t)}{Vb\ \Phi}$

où :

Isat $\Phi$ est la dernière valeur mesurée du courant Isat,

Vb $\Phi$ est la valeur de la tension d'alimentation Vb mesurée au moment de l'acquisition de Isat ;

. calculer un nouveau rapport cyclique RCO à appliquer au commutateur 3 et tel que :

$$RCO = \frac{Im + Io}{Isat\ (t)\ + Io}$$

Ces calculs intermédiaires du courant de saturation Isat en fonction de la tension d'alimentation Vb permettent de s'affranchir des variations de cette tension Vb entre deux mesures de Isat.

## Revendications

1. Procédé de régulation du courant moyen Im dans une charge selfique (1), connectée entre une source d'alimentation délivrant une tension Vb, et un commutateur (3) apte, de façon périodique et avec un rapport cyclique de commande RCO donné, soit à conduire le courant vers un potentiel de masse, soit à interrompre cette conduction, une diode (2) étant adaptée pour permettre à l'énergie stockée dans la charge selfique de recirculer vers le potentiel Vb, ledit procédé consistant à :

- générer, de façon cyclique et avec une récurrence faible relativement à la période de commutation, une augmentation de la durée de conduction du commutateur de façon à atteindre le courant de saturation Isat dans la charge selfique (1),
- mesurer le courant maximal Isat circulant dans le commutateur (3) une fois celui-ci atteint, et

- ajuster le courant moyen en faisant varier le rapport cyclique de commande RCO,

procédé caractérisé en ce que l'on calcule, en vue d'obtenir un courant moyen Im désiré, un nouveau rapport cyclique RCO tel que $RCO = \frac{Im + Io}{Isat + Io}$, où Io est une constante électrique caractéristique de la charge selfique (1) et de la diode (2).

2. Procédé selon la revendication 1, caractérisé en ce que l'on calcule la constante Io par la formule :

$$Io = \frac{V_D}{R}$$

dans laquelle $V_D$ est la tension aux bornes de la diode (2) dans le sens passant de cette dernière, et R la résistance nominale de la charge selfique (1).

3. Procédé selon l'une des revendications 1 ou 2, caractérisé en ce que l'on génère une augmentation de la durée de conduction du commutateur (3) en conservant un même rapport cyclique de commande RCO.

4. Procédé selon l'une des revendications 1 à 3, caractérisé en ce que, entre deux mesures du courant Isat :

- on procède avec une périodicité prédéterminée, à une mesure de la tension d'alimentation Vb,
- on calcule, à chaque instant t où la tension Vb est mesurée, une valeur du courant $Isat(t) = Isat\Phi \times \frac{Vb(t)}{Vb\Phi}$, où $Isat\Phi$ est la dernière valeur mesurée du courant Isat, et $Vb\Phi$ la valeur de la tension d'alimentation Vb mesurée au moment de l'acquisition de $Isat\Phi$
- et on calcule un nouveau rapport cyclique

$$RCO = \frac{Im + Io}{Isat(t) + Io}$$

5. Procédé selon la revendication 4, caractérisé en ce que l'on mesure la tension d'alimentation Vb en délivrant une image de celle-ci au moyen d'un pont diviseur (R1, R2), vers une entrée (6b) d'un convertisseur analogique/numérique (6) utilisé pour la mesure de Isat.

6. Dispositif de régulation du courant moyen dans une charge selfique (1) dotée d'un premier pôle connecté à une source d'alimentation délivrant une tension Vb, et d'un deuxième pôle, ledit dispositif comprenant :

- un commutateur (3) connecté au deuxième pôle de la charge selfique (1) et apte, de façon périodique et avec un rapport cyclique de commande RCO donné, soit à conduire le courant vers un potentiel de masse, soit à interrompre cette conduction,
- une diode de roue libre (2) montée en parallèle avec la charge selfique (1) et destinée à assurer la continuité du courant dans ladite charge selfique,
- des moyens de mesure (7, 8) du courant circulant dans le commutateur (3),
- des moyens de conversion analogique/numérique (6) agencés pour recevoir un signal issu des moyens de mesure,
- et une unité de calcul (5) agencée pour recevoir le signal issu des moyens de conversion analogique/numérique (6) et programmée pour commander cycliquement une augmentation de la durée de conduction du commutateur (3) de façon à atteindre le courant de saturation Isat dans la charge,

ledit dispositif étant caractérisé en ce que ladite unité de calcul (5) est également programmée pour générer un signal représentatif du rapport cyclique de commande RCO à appliquer au commutateur (3), avec :

$$RCO = \frac{Im + Io}{Isat + Io}$$

où :

Im = courant moyen désiré,
Io = constante électrique caractéristique de la charge selfique (1) et de la diode (2),
Isat = courant maximal circulant dans le commutateur (3).

7. Dispositif selon la revendication 6, caractérisé en ce qu'il comprend des moyens de mesure de la tension d'alimentation Vb, comportant un pont diviseur (R1, R2) agencé pour délivrer un signal proportionnel à la valeur de cette tension vers une entrée (6b) des moyens de conversion analogique/numérique (6) autre que celle (6a) recevant le signal de mesure.

**Patentansprüche**

1. Verfahren zum Regeln des Strommittelwertes Im in einer induktiven Last (1), die zwischen eine eine Spannung Vb abgebende Versorgungsquelle und einen Schalter (3) geschaltet ist, der periodisch und mit vorgegebenem Tastverhältnis RCO entweder den Stromfluß zu einem Massepotential schließt oder unterbricht, wobei eine Diode (2) es ermöglicht, daß die in der induktiven Last gespeicherte Energie zu dem Potential Vb zurückfließt, wobei dieses Verfahren darin besteht, daß:

- die Durchlaßzeit des Schalters zyklisch und mit relativ geringer Häufigkeit gegenüber der Schaltperiode so verlängert wird, daß der Sättigungsstrom Isat in der induktiven Last (1) erreicht wird,

- der durch den Schalter (3) fließende maximale Strom Isat, wenn er einmal erreicht ist, gemessen wird, und

- der Strommittelwert durch Ändern des Tastverhältnisses RCO eingestellt wird,

welches Verfahren dadurch gekennzeichnet ist, daß man zum Erreichen eines Soll-Strommittelwertes Im ein neues Tastverhältnis RCO gemäß

$$RCO = \frac{Im + Io}{Isat + Io}$$

berechnet, worin Io eine für die induktive Last (1) und die Diode (2) charakteristische elektrische Konstante ist.

2. Verfahren nach Anspruch 1, dadurch gekennzeichnet, daß man die Konstante Io mit der Formel:

$$Io = \frac{V_D}{R}$$

berechnet, worin $V_D$ die Spannung an den Klemmen der Diode (2) in deren Durchlaßrichtung und R der Nennwiderstand der induktiven Last (1) ist.

3. Verfahren nach Anspruch 1 oder 2, dadurch gekennzeichnet, daß die Durchlaßzeit des Schalters (3) unter Beibehaltung des gleichen Tastverhältnisses RCO verlängert wird.

4. Verfahren nach einem der Ansprüche 1 bis 3, dadurch gekennzeichnet, daß zwischen zwei Messungen des Stroms Isat:

- eine Messung der Versorgungsspannung Vb erfolgt,

- in jedem Augenblick t, in dem die Spannung $V_D$ gemessen wird, ein Wert des Stroms

$$Isat(t) = Isat\phi \times \frac{Vb\,(t)}{Vb\phi}$$

berechnet wird, worin Isat$\phi$ der letzte gemessene Wert des Stroms Isat und Vb$\phi$ der Wert der Versorgungsspannung Vb, der im Augenblick der Erfassung von Isat$\phi$ gemessen wurde, ist,

und ein neues Tastverhältnis

$$RCO = \frac{Im - Io}{Isat\,(t)\ + Io}$$

berechnet wird.

5. Verfahren nach Anspruch 4, dadurch gekennzeichnet, daß man die Versorgungsspannung Vb mißt, indem man diese an einen Spannungsteiler (R1, R2) abnimmt und einem Eingang (6b) eines zum Messen von Isat verwendeten Analog/Digital-Wandlers (6) zuführt.

6. Vorrichtung zum Regeln des Strommittelwertes in einer induktiven Last (1), die mit einem ersten Anschluß, der an einer eine Spannung Vb abgebenden Versorgungsquelle angeschlossen ist, und einem zweiten Anschluß versehen ist, wobei diese Vorrichtung aufweist:

- einen Schalter (3), der mit dem zweiten Anschluß der induktiven Last (1) verbunden ist und periodisch und mit vorgegebenem Tastverhältnis RCO entweder den Stromfluß zu einem Massepotential schließt oder unterbricht,

- eine Freilaufdiode (2), die zu der induktiven Last (1) parallel geschaltet ist und dazu dient, die Kontinuität des Stroms in der induktiven Last sicherzustellen,

- eine Einrichtung (7,8) zum Messen des im Schalter (3) fließenden Stroms,

- eine Analog/Digital-Wandlereinrichtung (6), die ein von der Meßeinrichtung abgegebene Signal empfängt,

- und eine Rechnereinheit (5), die das von der Analog/Digital-Wandlereinrichtung (6) abgegebene Signal empfängt und so programmiert ist, daß sie die Durchlaßzeit des Schalters (3) zyklisch so verlängert, daß der Sättigungsstrom Isat in der Last erreicht wird, wobei die Vorrichtung dadurch gekennzeichnet ist, daß die Rechnereinheit (5) ferner so programmiert ist, daß sie ein an den Schalter (3) anzulegendes, das Tastverhältnis RCO darstellendes Signal erzeugt, und zwar gemäß:

$$RCO = \frac{Im + Io}{Isat + Io}$$

worin:

Im = Strom-Sollmittelwert

Io = elektrische Konstante, die für die induktive Last (1) und die Diode (2) charakteristisch ist,

Isat = maximaler Strom, der in dem Schalter (3) fließt

7. Vorrichtung nach Anspruch 6, dadurch gekennzeichnet, daß sie eine Meßeinrichtung zum Messen der Versorgungsspannung Vb aufweist, die einen Spannungsteiler (R1, R2) besitzt, um ein zu der Höhe dieser Spannung proportionales Signal an einen Eingang (6b) der Analog/Digital-Wandlereinrichtung (6), welcher nicht der das Meßsignal empfangende Eingang (6a) ist, anzulegen.

## Claims

1. Method of regulating the mean current Im in a self-inductive load (1) connected between a power supply source delivering a voltage Vb and a switch (3) able, periodically and with a given control duty cycle RCO, either to conduct the current to an earth potential, or to interrupt this conduction, a diode (2) being configured to allow the energy stored in the self-inductive load to recirculate to the Vb potential, the said method consisting in:

   - generating, cyclically and with a low recurrence rate relative to the switching period, an increase in the conduction time of the switch so as to reach the saturation current Isat in the self-inductive load (1),
   - measuring the maximum current Isat flowing in the switch (3) once that is reached, and
   - adjusting the mean current by causing the control duty cycle RCO to vary,

   method characterized in that, with a view to obtaining a desired mean current Im, a new duty cycle RCO is calculated such that $RCO = \frac{Im+Io}{Isat+Io}$, where Io is an electrical constant characteristic of the self-inductive load (1) and of the diode (2).

2. Method according to Claim 1, characterized in that the constant Io is calculated by the formula:

$$Io = \frac{V_D}{R}$$

   in which $V_D$ is the voltage at the terminals of the diode (2) in the conducting direction thereof, and R the nominal resistance of the self-inductive load (1).

3. Method according to one of Claims 1 and 2, characterized in that an increase in the conduction time of the switch (3) is generated while keeping the same control duty cycle RCO.

4. Method according to one of Claims 1 to 3, characterized in that, between two measurements of the current Isat:

   - a measurement of the power supply voltage Vb is carried out, with a predetermined periodicity,
   - at each instant t where the voltage Vb is measured, a value of the current $Isat(t) = Isat\Phi \times \frac{Vb(t)}{Vb\Phi}$ is calculated, where $Isat\Phi$ is the last measured value of the current Isat, and $Vb\Phi$ the value of the power supply voltage Vb measured at the moment of the acquisition of $Isat\Phi$
   - and a new duty cycle is calculated, $RCO = \frac{Im - Io}{Isat(t) + Io}$

5. Method according to Claim 4, characterized in that the power supply voltage Vb is measured by delivering an image thereof by means of a divider bridge (R1, R2) to an input (6b) of an analog/digital converter (6) used for the measurement of Isat.

6. Device for regulating the mean current in a self-inductive load (1), which load is equipped with a first pole connected to a power supply source delivering a voltage Vb, and with a second pole, the said device comprising:

   - a switch (3) connected to the second pole of the self-inductive load (1) and able, periodically and with a given control duty cycle RCO, either to conduct the current to an earth potential, or to interrupt this conduction,
   - a freewheel diode (2) mounted in parallel with the self-inductive load (1) and intended to provide continuity of the current in the said self-inductive load,
   - means (7, 8) of measuring the current flowing in the switch (3),
   - analog/digital conversion means (6), configured to receive a signal originating from the measurement means,
   - and a calculating unit (5) configured to receive the signal originating from the analog/digital conversion means (6) and programmed cyclically to cause an increase in the conduction time of the switch (3) so as to reach the saturation current Isat in the load,

   the said device being characterized in that the said calculating unit (5) is also programmed to generate a signal representative of the control duty cycle RCO to be applied to the switch (3), with:

$$RCO = \frac{Im + Io}{Isat + Io}$$

   where:

   Im = desired mean current,
   Io = electrical constant characteristic of the self-inductive load (1) and of the diode (2),
   Isat = maximum current flowing in the switch (3).

7. Device according to Claim 6, characterized in that it comprises means of measuring the power supply voltage Vb, including a divider bridge (R1, R2) configured to deliver a signal proportional to the value of this voltage to an input (6b) of the analog/digital conversion means (6) other than that (6a) receiving the measurement signal.

Fig 1

Fig 2